# EUROPEAN PATENT APPLICATION

(11) **EP 1 522 222 A1**
(43) Date of publication of application: **13.04.2005**
(21) Application number: 04472001.9
(22) Date of filing: 14.05.2004
(51) Int. Cl.: A23C 9/152, A23C 9/158, A23C 9/00, A23C 9/154

(54) **Milk delicacy and method for its production**

(30) Priority: 08.10.2003 GB 1008243
(71) Applicant: Zlatanov, Georgi Ivanov, 6300 Haskovo (BG)
(72) Inventor: Zlatanov, Georgi Ivanov, 6300 Haskovo (BG)
(74) Representative: Vinarova, Emilia Zdravkova

(57) **Abstract**

The invention relates to a healthy milk delicacy, made from condensed fresh pure raw buffalo milk, containing baking soda and sugar 50-53 weight per cent. The delicacy is enriched with fat-soluble vitamins A and E.

The invention further relates to method for production of milk delicacy, which consists in supplying of the required quantity of pure raw buffalo milk in an open pot, and addition of the required quantities of baking soda and sugar at constant stirring up the mixture and heating it until it bubbles over, afterwards boiling it until it becomes thick and cream-like, then portioning and packing the obtained milk delicacy in heat resistant and hermetic packages. The addition of the baking soda is at temperature 20°C, the addition of the sugar is at temperature 60°C, and after reaching the required consistency are performed subsequently cooling off the mixture to temperature 85°C and its enrichment with fat-soluble vitamins A and E.

## Description

### FEALD OF THE INVENTION

The invention relates to milky delicacy and method for its production, which have application in the food-processing industry, more specially, in the dairy industry.

### PRIOR ART

There is known a milk delicacy [ 1 ] made from condensed buffalo milk containing baking soda and sugar 40-47 weight per cent.

There is known a method for producing of the known milk delicacy [ 1 ], which consists in the supplying of the required quantity of buffalo milk, mixed with baking soda in an open boiling pot. The sugar is added at temperature 40°C and the mixture is boiled until it bubbles over. The mixture is boiled 2,5-3 hours until becomes thick and cream-like, afterwards the temperature of the mixture is reduced and it is portioned and packed in head resistant and hermetic packages.

Disadvantage of the known milk delicacy is that its consumption is not healthy enough, because due the continual heat treatment (double bubbly continual boiling) the most of the vitamins, contained in the raw buffalo milk are lost. The sugar content below 50 weight per cent limited the durability of the milk delicacy and favours the origin of microorganisms in it.

The aim of the invention is to create a healthier for consumers and more durable milk delicacy and method for its production.

### SUMMARY OF THE INVENTION

This aim is solved by milk delicacy made from condensed buffalo milk containing sugar and baking soda. The sugar content is 50-53 weight per cent. The delicacy is enriched with fat-soluble vitamins A and E.

This aim is solved also by method for production of milk delicacy, which consists in supplying the required quantity of pure raw buffalo milk in an open pot, and addition to it the required quantities of baking soda and sugar at constant stirring up the mixture and heating it until it bubbles over, afterwards boiling it until it becomes thick and cream-like, then portioning and packing the obtained milk delicacy in heat resistant and hermetic packages. The addition of the baking soda is at temperature 20°C, the addition of the sugar is at temperature 60°C, and after reaching the required consistency are performed subsequently cooling off the mixture to temperature 85°C and its enrichment with fat-soluble vitamins A and E.

The advantage of the milk delicacy according to the invention is that its consumption is healthier then the known one. This is due to the fact that in the final stage of its production the milk delicacy is enriched with vitamins A and E. On the other hand the sugar content of minimum 50 weight per cent extends its durability and prevents the origin of microorganisms in it.

### DETAILED DESCRIPTION OF THE INVENTION

The invention is explained more detailed with an embodiment of the production of milk delicacy.

The required quantity of fresh pure raw buffalo milk, for example 100 liters, with temperature 8°C is supplied in an open pot, for example a double-walled pot with heaters built between the walls. The milk is heated to 20°C and then at constant stirring up 140-160 grams baking soda is added. When at constant stirring up the mixture reaches temperature 60°C sugar, for example 20 kilos, is added. The mixture is heated at constant stirring up until it bubbles over and afterwards it is boiled about 3 hours until it becomes thick and cream-like. The ready mixture is cooled off to 85°C and is enriched with fat-soluble vitamins A and E. The quantities of added vitamins A and E are equal to the quantities, which are lost during the heat treatment. Thus the vitamins are completely restored. On the other hand these quantities are within 1/3 of the required daily needs for the regular functioning of the human organism. The obtained mixture is then portioned and packed in heat resistant hermetic packages.

The inventor has achieved the experimental production of the milk delicacy according to the method of the invention described above. The obtained milk delicacy has been analyzed in the National Diagnostic Veterinary Institute for Scientific Researches in Sofia, Bulgaria. The parameters of the milk delicacy are the following:
1. appearance and color: thick homogenous mass with caramel color;
2. consistency: thick and cream-like;
3. taste and smell: specific pleasant and sweet without additional smell and taste;
4. humidity: 24,2 %;
5. fats: 7,2 %;
6. acidity according to Tjorner: 28°T;
7. sugar: 51 %;
8. energy: 320 kcal. per 100 g;
9. microbiologic indications:
   coliforms per 1 g. - not Found;
   coagolasapositive staphylococcosis per 1 g.- not found;
   salmonella bacteria per 25 g. - not found.

Taking into consideration these indications the National Diagnostic Veterinary Institute for Scientific Researches in Sofia concluded that the milk delicacy according to the invention meets all the requirements of harmlessness and stability for consumption.

### REFERENCES

1. Published Bulgarian Application for Utility Model No. 106364

## Claims

1. Milk delicacy made from condensed buffalo milk containing sugar and baking soda, **characterized by** the fact that the sugar content is 50-53 weight per cent, and that the delicacy is enriched with fat-soluble vitamins A and E.

2. Method for production of milk delicacy according claim 1, which consists in supplying of the required quantity of pure raw buffalo milk in an open pot, and addition to it the required quantities of baking soda and sugar at constant stirring up the mixture and heating it until it bubbles over, afterwards boiling it until it becomes thick and cream-like, then portioning and packing the obtained milk delicacy in heat resistant and hermetic packages, **characterized by** the fact that the addition of the baking soda is at temperature 20°C, the addition of the sugar is at temperature 60°C, and after reaching the required consistency are performed subsequently cooling off the mixture to temperature 85°C and its enrichment with fat-soluble vitamins A and E.
